(19)

Europäisches
Patentamt
European
Patent Office
Office européen
des brevets

(11)  **EP 4 768 752 A1**

(12)  **EUROPEAN PATENT APPLICATION**

(43) Date of publication:
**01.07.2026  Bulletin 2026/27**

(21) Application number: **24223347.6**

(22) Date of filing: **27.12.2024**

(51) International Patent Classification (IPC):
**F16H 3/72** *(2006.01)*       **F16H 25/20** *(2006.01)*
**F16H 25/24** *(2006.01)*

(52) Cooperative Patent Classification (CPC):
**F16H 25/20; F16H 3/724; F16H 25/2454;**
F16H 2025/2087

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Hiab AB
164 22 Kista (SE)**

(72) Inventor: **ELSMARK, Lars
132 37 Saltsjö-Boo (SE)**

(74) Representative: **Zacco Sweden AB
P.O. Box 5581
Löjtnantsgatan 21
114 85 Stockholm (SE)**

(54)  **A LINEAR ELECTRO-MECHANICAL ACTUATOR ASSEMBLY FOR A WORKING EQUIPMENT, A WORKING EQUIPMENT AND A METHOD FOR CONTROLLING A LINEAR ELECTRO-MECHANICAL ACTUATOR ASSEMBLY**

(57)  The disclosure relates to a linear electro-mechanical actuator assembly (100) for a working equipment (200), comprising: a translation assembly (10) including a rotatable part (12) and a linearly movable part (14) connected to each other to translate a rotating movement of the rotatable part (12) to a linear movement of the linearly movable part (14); and a drive assembly (20) arranged to provide the rotating movement of the rotatable part (12) of the translation assembly (10); wherein the drive assembly (20) comprises a first electric motor (21), a second electric motor (22) and a planetary gear assembly (40) connected to the rotatable part (12) of the translation assembly (10), wherein the actuator assembly (100) further comprises a control unit (110) configured to control the drive assembly (20) based on a determined load on the translation assembly (10) and a desired speed of the linear movement of the translation assembly (10) so as to optimize the efficiency of the first and second electric motor (21;22).

Fig. 1

EP 4 768 752 A1

## Description

Technical field

The present disclosure relates to a linear electro-mechanical actuator assembly for a working equipment, a working equipment and a method for controlling a linear electro-mechanical actuator assembly. More specifically, the disclosure relates to a linear electro-mechanical actuator assembly for a working equipment, a working equipment and a method for controlling a linear electro-mechanical actuator assembly as defined in the introductory parts of the independent claims.

Background art

Working equipment, such as cranes, loader cranes, excavators, dumpers, demountables, hooklifts, forklifts and tail lifts, typically comprise hydraulic cylinders for lifting and lowering operations. Hydraulic cylinders have many advantages, but hydraulic machinery generally suffers from big energy losses. The hydraulic cylinders are driven by hydraulic fluid under pressure, which may be generated by hydraulic pumps driven by a combustion engine in the vehicle. The general trend for electrification leading to combustion engines being replaced by electric engines, powered by e.g. batteries in vehicles such as trucks also highlights the need for energy efficiency for the working equipment that is mounted to the vehicles.

Electro-mechanical actuators (EMAs) are used in different applications and are typically used to move objects between different positions. An electro-mechanical actuator may comprise a rotating electric motor and a mechanical transmission to convert the rotational speed and torque of the motor to a linear motion. Such mechanical transmission may comprise a gearbox and a screw shaft. The electric motor comprises a stator and a rotor, wherein the rotor of the electric motor is configured to generate a linear movement of the screw shaft. Using such electro-mechanical actuators also in working equipment has started to become more and more common.

However, when changing from hydraulic actuators to EMAs in working equipment there are a number of challenges. For example, thermal management is crucial when removing the hydraulic system which also provides cooling. Furthermore, the power density of the actuator, that is the force x speed for a given size of the actuator, is a challenge. A hydraulic cylinder can by design provide high output power while having a very compact size. The hydraulic cylinder also has a very large operating window (force/speed), and many hydraulic systems can provide both pressure and flow to utilize this window. The EMAs should of course be able to provide the same power compared to the hydraulic actuators, and at the same time remain in similar size. When EMAs are applied to working equipment, the space is often limited on movable arms etc. and the weight of the EMAs is another important parameter as this affects the structure of the working equipment and ultimately the performance of e.g. movable arms of the working equipment. Another problem when changing to EMAs in working equipment is that these types of equipment often are used with heavy loads requiring high forces from an EMA, and at the same time also slow movements of the load to operate the heavy load in a safe way. This put further concurrent requirements on the EMA for relatively slow linear movements. For the example of a loader crane moving a heavy load of e.g. building material to one of the floors of a building under construction, this typically means that an EMA for this would need to provide high forces to move the load but at the same time make the movement slowly to not lose control and keep the safety for the crane operators and building constructors. This is very challenging for the electric motors of the EMAs because the efficiency is low when driving slowly with high load. Also, the risk of overheating is increased.

There is thus a need for an improved solution for linear electro-mechanical actuator assemblies, which eliminates the deficiencies and disadvantages with prior art.

Summary

It is an object of the present disclosure to mitigate, alleviate or eliminate one or more of the above-identified deficiencies and disadvantages in the prior art and solve at least the above-mentioned problem.

It is a further objective of the present invention to achieve an electro-mechanical actuator assembly and a working equipment comprising said electro-mechanical actuator assembly, which has improved efficiency.

These objectives are achieved with the above-mentioned electro-mechanical actuator assembly and working equipment according to the appended claims.

According to a first aspect of the present disclosure there is provided a linear electro-mechanical actuator assembly for a working equipment, comprising: a translation assembly including a rotatable part and a linearly movable part connected to each other to translate a rotating movement of the rotatable part to a linear movement of the linearly movable part; and a drive assembly arranged to provide the rotating movement of the rotatable part of the translation assembly; wherein the drive assembly comprises a first electric motor, a second electric motor and a planetary gear assembly connected to the rotatable part of the translation assembly, wherein the actuator assembly further comprises: a control unit configured to control the drive assembly based on a determined load on the translation assembly and a desired speed of the linear movement of the translation assembly so as to optimize the efficiency of the first and second electric motor.

By using two electric motors and a planetary gear assembly to drive the translation assembly of a linear electro-mechanical actuator, the operating window of the actuator is greatly increased with regard to power and speed. Furthermore, the electric motors can be controlled to optimize the efficiency at all points and this way, the efficiency of the electric motors at low speeds with high load can be increased. Having two electric motors will also provide redundancy in case of failure and the electric motors can be smaller and slimmer but still provide the required power. It is to be understood that controlling the drive assembly to optimize the efficiency of the first and second electric motor means controlling the drive assembly so that the first and second electric motor operates at operating points with high efficiency. Operating points with high efficiency may be defined as operating points with efficiencies of at least 80 %, preferably at least 90%.

The translation assembly may comprise a first end part and a second end part, wherein the linearly movable part comprises the second end part. The first end part is typically connected to one part of the working equipment and the second end part is connected to another moveable part of the working equipment. When the rotatable part of the translation assembly is rotated, the rotating movement is translated into a linear movement of the linearly moveable part and the distance between the first end part and the second end part of the actuator increases or decrease depending on the rotational direction of the rotatable part. This way, the different parts of the working equipment will move in relation to each other.

The linearly moveable part may comprise an actuating rod or screw shaft with outer threads. The linearly moveable part is typically received within the rotatable part, which could be a threaded cylinder or similar. Exactly how the translation assembly of the electro-mechanical actuator assembly is configured to translate the rotating movement to a linear movement will not be described herein. It is to be understood that such translation assembly could be configured in many different ways and is not part of the present invention.

The first electric motor and the second electric motor may be powered by alternating current (AC) and thus be controlled by AC power signals. The electric motors may for example be permanent magnet synchronous motors. Each electric motor thus comprises a rotor and a stator and a magnetic field causes the rotor to rotate. The rotational speed of the first and second electric motor is typically controlled by controlling the frequency of the AC supply. A high frequency will result in a higher rotational speed. The rotational speed of the electric motor may also be influenced by the number of poles in the electric motor. More poles result in a lower rotational speed for a given frequency. The torque produced by the electric motors is directly proportional to the current supplied. Increasing the current increases the torque. Adjusting the voltage can also affect the torque provided by the electric motors. Higher voltage typically results in higher torque. The torque provided by the electric motors must overcome the load on the motor. Thus, if the load on the electric motor increases, the motor will draw more current to maintain the required torque. The efficiency of the electric motors depends on the speed and the torque. The electric motors will typically operate with low efficiency at low speeds and at low torque. The first and second electric motors are configured to receive electric power from a power source, such as a battery, a system of batteries or the electric mains. The first and second electric motors may be selected so that they have the same or very similar performance or selected so that they have different performance.

The load on the translation assembly may also generally be referred to as the load on the actuator. The load may be determined either directly by means of a sensor or indirectly from operational parameters of the actuator assembly. The load on the translation assembly may be determined by using a force load sensor arranged at the first end part or at the second end part of the translation assembly. Thus, the force load sensor may be arranged at any of the attachment points between the translation assembly and the working equipment. The control unit may be arranged in communication with the force load sensor and be configured to determine the load on the actuator based on signals from the force load sensor. The load on the actuator may thus be a measured load. Alternatively, the load on the translation assembly may be determined based on at least one operating parameter of the actuator assembly, for example the current supplied to the electric motors. As previously described, the current supply is proportional to the torque provided by the electric motor, and the torque corresponds to the load acting on the electric motor and thus the actuator. Hence, the load on the translation assembly may be calculated based on the current supply to the electric motors.

The first electric motor and the second electric motor may be connected to different gears of the planetary gear assembly. This way, the drive assembly comprises two input gears and one output gear. The planetary gear assembly is thus a dual input planetary gear assembly where both input gears can be driven one at a time or simultaneously. The electric motors will thus drive different parts of the planetary gear assembly, and the output can thereby be different depending on how the drive assembly is controlled and configured. The rotational speed and torque of the two electric motors may be combined through the planetary gear assembly and the resulting motion is transmitted to the output gear.

The planetary gear assembly comprises a sun gear, a ring gear, planet gears and a planet carrier. The sun gear is centrally arranged and engages with the planet gears revolving around the sun gear. The planet gears are mounted on the planet carrier. The ring gear is the outer gear arranged to engage with the planet gears. The planetary gear assembly may comprise any number of planet gears, for example three or four planet gears.

In some examples, the first electric motor is connected to the sun gear of the planetary gear assembly, the second electric motor is connected to the ring gear of the planetary gear assembly and the rotatable part of the translation assembly is connected to the planet carrier of the planetary gear assembly. Thus, the sun gear and the ring gear may be the input gears, and the planet carrier may be the output gear. In a typical planetary gear assembly, if the ring gear and the sun gear are both rotating, they tend to rotate in opposite directions. This is due to the way the planet gears mesh with both the sun gear and the ring gear. When the sun gear rotates in one direction, the planet gears rotate in the opposite direction, which in turn causes the ring gear to rotate in the opposite direction to the sun gear. The planet carrier may rotate in the same direction as the sun gear. When both electric motors are operating, the planet carrier will have a speed and torque that are a result of the combined inputs from the ring gear and the sun gear. If both inputs are high speed and high torque, the planet carrier will typically have a high output speed, but the exact behaviour will depend on the gear ratios, the direction of rotation and the load on the drive assembly.

The control unit may be configured to control the drive assembly to selectively operate in a plurality of operating modes, comprising at least a single drive mode wherein one single electric motor is controlled to drive the planetary gear assembly, and a first dual drive mode wherein the first and second electric motors are controlled in the same rotational direction to drive the planetary gear assembly. By being able to selectively operate the first electric motor and/or the second electric motor, the control unit can optimize the efficiency of one or both electric motors depending on the desired speed of the actuator and the load on the actuator. It is to be understood that when we herein mention speed of the actuator, it is meant the speed of the linear movement of the linearly moveable part of the translation assembly. The speed of such linear movement corresponds to the speed of the movement of a part of the working equipment connected to the actuator. It is also to be understood that the desired speed of the linear movement requires a corresponding output speed of the planet carrier of the planetary gear assembly.

The control unit may further be configured to control the drive assembly to minimize the energy consumption of the actuator assembly by determining the power distribution between the electric motors and chose an operating point where the electric motors operate with high efficiency. For a specific operating point (force, speed), the consumed power can be calculated as follows:

$$P_{discharge} = (T_{EM1} \times \omega_{EM1})/(\eta_{EM1}(T_{EM1}, \omega_{EM1})) + (T_{EM2} \times \omega_{EM2})/(\eta_{EM2}(T_{EM2}, \omega_{EM2})) \qquad (1)$$

where $P_{discharge}$ is the power from the power source, $T_{EM1}$ and $T_{EM2}$ is the respective torque of the first electric motor and the second electric motor, $\omega_{EM1}$ and $\omega_{EM2}$ is the respective angular velocity of the first and second electric motor, and $\eta_{EM1}$ and $\eta_{EM2}$ is the respective operating point efficiency of the first and second electric motor.

The single drive mode is typically used when it is determined that one single electric motor, the first electric motor or the second electric motor, can provide the required torque and desired speed while operating with a high efficiency. If not, a dual drive mode may be chosen.

The single drive mode may comprise controlling only the first electric motor to drive the sun gear of the planetary gear assembly. This way, the planet gears will rotate around their own axes and orbit around the sun gear. The planet gears are meshed with both the sun gear and the ring gear and act as intermediaries, transferring motion from the sun gear to the planet carrier. When the sun gear is rotating, the planet gears will move and cause the planet carrier to rotate as well. The speed of the planet carrier depends on the gear ratios between the sun gear, the ring gear and the planet gears. In the case where the sun gear is smaller than the ring gear, the planet carrier will rotate more slowly than the sun gear but with more torque. This single drive mode is therefore typically used when there is a relatively high load on the actuator and the desired speed is low.

Alternatively, the single drive mode may comprise controlling only the second electric motor to drive the ring gear of the planetary gear assembly. The planet gears are meshed with both the sun gear and the ring gear. Since the ring gear is being driven, the planet gears will rotate around their own axes as a result of the motion of the ring gear. These planet gears are now forced to move due to the rotation of the ring gear. The speed and torque of the output from the planet carrier will depend on the relative sizes and gear ratios between the sun gear and the ring gear. In the case where the ring gear is larger than the sun gear, the planet carrier will rotate with a higher speed than the ring gear, but with reduced torque. Thus, this single drive mode is typically used when a high output speed is desired

In the single drive mode, the other electric motor that is not driving any gear may be locked. This way, the input gear connected to the locked electric motor will be a fixed component in the planetary gear assembly and different output speed and torque can be achieved.

The first dual drive mode, where the first and second electric motors are controlled in the same rotational direction to drive the planetary gear assembly, is typically used when the load on actuator is high, and the desired speed of the actuator is high. In such an event, a high output torque is required, and the output rotational speed should be high. When operating the electric motors in the same direction and thereby forcing the ring gear and the sun gear to rotate in the same direction, the sun gear and the ring gear are both applying forces in the same rotational direction, and the planet gears will adjust accordingly. Since the forces are applied in the same direction, they will add to each other. The planet gears will attempt to balance the forces, and the output from the planet carrier will be a higher speed than either electric motor's speed. Similarly, the torque output from the planet carrier will be higher. To optimize the efficiency of the electric motors and provide the required torque and desired speed, the control unit may control the first electric motor to operate at a high speed, for example 80% of a maximum speed, and high torque, for example 100% of a maximum torque. The control unit may further control the second electric motor to operate at a similar high speed, for example 80% of a maximum speed, in the same direction as the first electric motor, and provide a similarly high torque, for example 100% of a maximum torque. When both electric motors are operating at high speed and high torque, they will operate with high efficiency. The configuration of the planetary gear assembly and driving the electric motors in the same direction will increase the rotational speed of the planet carrier. Thus, by using the first dual drive mode, both electric motors can be operated with higher efficiency (high speed and high torque) compared to operating one electric motor.

In some examples, the control unit is further configured to control the drive assembly to selectively operate in a second dual drive mode, wherein the first and second electric motors are controlled in opposite directions to drive the planetary gear assembly. By controlling the electric motors to operate in opposite directions, one electric motor will operate as a motor and the other will operate as a generator. This way, different outputs can be achieved while optimizing the operating points of the electric motors to operating points with higher efficiency. In this dual drive mode, the sun gear and the ring gear will apply opposing forces on the planet gears. Since they are rotating in opposite directions, the planet gears will rotate around the planet carrier in response to these opposing forces. This way the planet carrier rotates. When the motors are operating in opposite directions, the planet carrier acts as an intermediary that adjusts the resulting speed and torque from the combination of the two electric motor inputs. The torque applied by the two electric motors will combine in a way that depends on their relative speeds and power. Since the electric motors are rotating in opposite directions, the planet gears will divide the torque in such a way that the planet carrier will rotate in a direction determined by the relative strengths and speeds of the two electric motors.

In the second dual drive mode where the first and/or the second electric motor operates as a generator, the total charging power to the power source (battery) is expressed as follows:

$$P_{charge} = T_{EM1} \times \omega_{EM1} \times \eta_{EM1}(T_{EM1}, \omega_{EM1}) + T_{EM2} \times \omega_{EM2} \times \eta_{EM2}(T_{EM2}, \omega_{EM2}) \qquad (2)$$

The control unit may be configured to determine the optimal operating point for the first and second electric motor based on equation (1) and (2) above. The control unit may thus be configured to determine the best combination of $\eta_{EM1}$ $(T_{EM1}, \omega_{EM1})$ and $\eta_{EM2}(T_{EM2}, \omega_{EM2}))$.

As an example, the second dual drive mode may be used when there is a high load on the actuator and the desired speed of the actuator is low. In such an event, the control unit may control the first electric motor to operate at a high speed (for example 100% of a maximum speed) in a first direction, and with high torque, for example 100% of a maximum torque. The control unit may further control the second electric motor to operate at a similar high speed (for example 100% of a maximum speed) in a second opposite direction, and with a similar high torque, for example 100% of a maximum torque. When both electric motors are operating at high speed and high torque, they will operate with high efficiency. Since the electric motors are operated in opposite directions the rotational speed of the planet carrier may be decreased. Thus, by controlling both electric motors to drive the planetary gear assembly in opposite directions, a low output speed can be achieved while operating at an operating point with higher efficiency compared to only operating one electric motor.

In some examples, the drive assembly further comprises a clutch configured to be controlled to selectively connect both electric motors to the same gear of the planetary gear assembly. The clutch may be controlled by the control unit. The control unit is typically configured to control the clutch to connect both electric motors to the sun gear. This may be performed when the load on the actuator is very high, and a very high gear ratio is desired. By connecting both electric motors to the sun gear, the torque on the sun gear can be maximised and the output torque will be increased. When both electric motors are connected to the sun gear, the ring gear is suitably locked. The first dual drive mode may thus comprise controlling the clutch to connect also the second electric motor to the sun gear and control the electric motors to operate in the same rotational direction to drive the sun gear.

The actuator may further comprise a load holding assembly arranged to prevent movement of the linearly moveable part of the translation assembly in response to a load holding event. In the event that there is a loss of electric power or the electric motors for any other reason fail to rotate the rotatable part of the translation assembly, the actuator should still be able to carry the current load. The load holding assembly will then be activated and thereby cause the actuator to stop in its current position. The load holding assembly will prevent any linear movement of the linearly movable part and safety is ensured. The load holding assembly may be arranged as a separate assembly between the drive assembly and the translation assembly or it may be integral with the translation assembly. Thus, the load holding assembly may be a separate arrangement arranged between planetary gear assembly and the rotatable part of the translation assembly, configured to lock the rotatable part so that it does not rotate when a load holding event is occurring. Alternatively, the load holding assembly may be integral in the translation assembly, for example such as a self-locking function between the rotatable part and the linearly moveable part of the translation assembly.

According to some examples, the control unit is configured to determine the desired speed of the linearly movable part of the translation assembly based on input signals from a manually operated manoeuvring element associated with the working equipment. The operator may thus move a lever, handle, joystick or similar with a speed corresponding to the desired speed of the linear movement of the actuator. The control unit will this way determine the desired speed of the linearly moveable part of the translation assembly.

According to a second aspect of the present disclosure, there is provided a working equipment comprising at least one actuator assembly according to the first aspect. The working equipment may for example be a loader crane, forklift, tail lift, skip loader, hook lift or roll-off cable hoist, which may be used for applications in e.g. logistics, waste and recycling or forestry applications. The working equipment may further comprise working tools to e.g. pick up objects, dig, harvest etc., and hence be used in the work performed with the working equipment. The working tool may be mounted to an end of a crane arm. Examples of such working tools include grapples, clamshell buckets, buckets, brick grabs and grips. The working equipment may comprise a linear electro-mechanical actuator assembly configured to operate the movements of the working tool to interact with objects or material to be picked up, harvested, collected etc. The working equipment may further comprise extendable stabilizer legs operated by a linear electro-mechanical actuator assembly as disclosed herein.

The working equipment may be configured to be arranged on a vehicle. The vehicle may be an electric driven vehicle. The vehicle may be propelled by a combustion engine. The vehicle may be an autonomous vehicle, or a semi-autonomous vehicle.

Effects and features of the second aspect are to a large extent analogous to those described above in connection with the first aspect. Examples mentioned in relation to the first aspect are largely compatible with the second aspect.

According to a third aspect of the present disclosure, there is provided a method for controlling a linear electro-mechanical actuator assembly comprising a translation assembly including a rotatable part and a linearly movable part connected to each other to translate a rotating movement of the rotatable part to a linear movement of the linearly movable part; and a drive assembly arranged to provide the rotating movement of the rotatable part of the translation assembly; wherein the drive assembly comprises a first electric motor, a second electric motor and a planetary gear assembly connected to the rotatable part of the translation assembly, wherein the method comprises the step of: controlling the drive assembly based on a determined load on the translation assembly and a desired speed of the linear movement of the translation assembly so as to optimize the efficiency of the first and second electric motor. The method may be performed by the control unit of the actuator assembly. More specifically, the method may be performed by a processor of the control unit. It is to be understood that controlling the drive assembly to optimize the efficiency of the first and second electric motor means controlling the drive assembly so that the first and second electric motor operates at operating points with high efficiency.

Effects and features of the third aspect are to a large extent analogous to those described above in connection with the first and second aspects. Examples mentioned in relation to the first aspect are largely compatible with the third aspect.

A computer program is also provided. The computer program comprises computer-readable instructions which, when executed by the processor of the linear electro-mechanical actuator assembly, cause the processor to perform the steps of the method as disclosed herein. Furthermore, there is provided a computer program product comprising at least one computer-readable medium, such as a non-transitory memory, storing the above-mentioned computer program.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.

Figure 1 shows a linear electro-mechanical actuator assembly for a working equipment according to an example of the present disclosure.

Figure 2 schematically shows a planetary gear assembly according to an example of the present disclosure.

Figure 3 schematically shows a linear electro-mechanical actuator assembly according to an example of the present disclosure.

Figure 4 schematically shows a linear electro-mechanical actuator assembly according to an example of the present disclosure.

Figure 5 schematically shows a linear electro-mechanical actuator assembly according to an example of the present disclosure.

Figure 6 schematically shows a working equipment according to an example of the present disclosure.

Figure 7 schematically shows a working equipment on a vehicle according to an example of the present disclosure.

Figure 8 shows diagrams of electric motor efficiency as a function of torque and speed.

Figure 9 schematically illustrates a method for controlling a linear electro-mechanical actuator assembly according to an example of the present disclosure.

Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

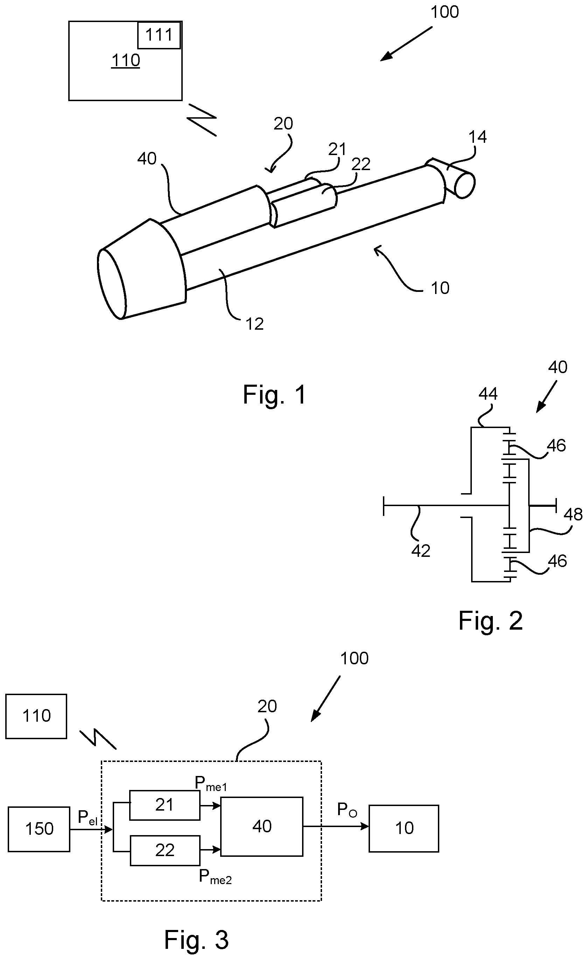

Figure 1 shows a linear electro-mechanical actuator assembly 100 for a working equipment according to an example of the present disclosure. The actuator assembly 100 comprises a translation assembly 10 including a rotatable part 12 and a linearly movable part 14 connected to each other to translate a rotating movement of the rotatable part 12 to a linear movement of the linearly movable part 14. It is to be understood that the rotatable part 12 shown in this figure is only an example of how the rotatable part 12 can be configured. It is to be understood that the rotatable part 12 could be configured in various ways.

The actuator assembly 100 further comprises a drive assembly 20 arranged to provide the rotating movement of the rotatable part 12 of the translation assembly 10. The drive assembly 20 comprises a first electric motor 21, a second electric motor 22 and a planetary gear assembly 40 connected to the rotatable part 12 of the translation assembly 10. The first electric motor 21 and the second electric motor 22 are connected to different gears 42, 44 of the planetary gear assembly 40. The electric motors 21, 22 may be selected so that they have the same or very similar performance or selected so that they have different performance. They may further be selected to fit the different gears 42, 44 that they are connected to.

The actuator assembly 100 further comprises a control unit 110 configured to control the drive assembly 20 based on a determined load on the translation assembly 10 and a desired speed of the linear movement of the translation assembly 10 so as to optimize the efficiency of the first and second electric motor 21, 22. The desired speed of the linear movement may also be referred to as a desired speed of the linearly moveable part 14 of the translation assembly 10. The desired speed of the linear movement may be deduced from a desired movement of a corresponding part of the working equipment that the actuator assembly 100 operates. In the example of a loader crane the actuator assembly 100 may be applied to control the pivoting angle of one of the booms of the loader crane, the desired speed may then be calculated from a wanted movement of the tip of the loader crane arm or received through a command for the particular pivoting movement of the boom in question. The load on the translation assembly 10 may be determined either directly by a sensor arranged in association with the translation assembly 10, or indirectly based on operating parameters of the actuator assembly 100

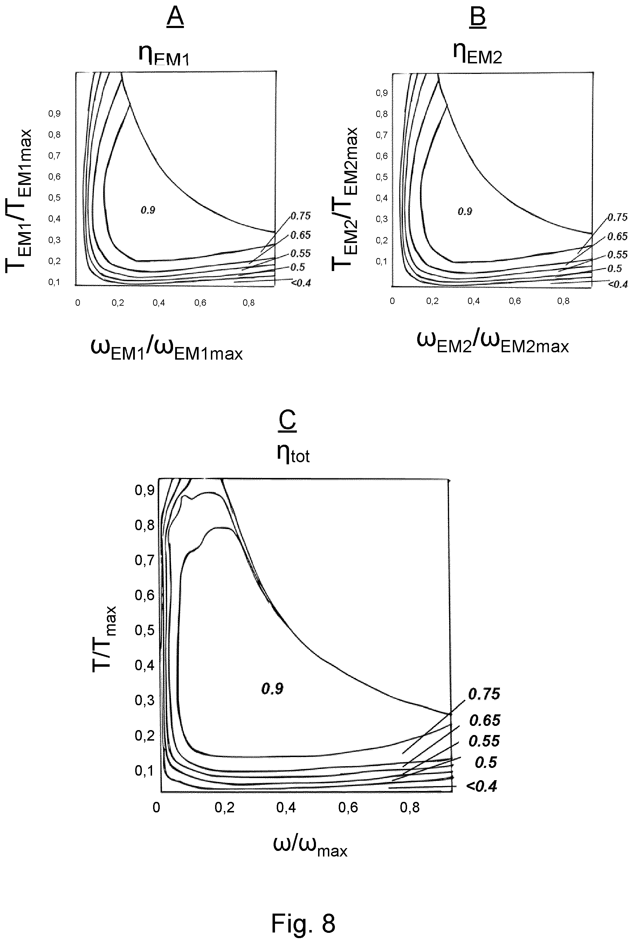

The control unit 110 comprises at least one processor 111 and a storage medium (not shown). The storage medium may e.g. be used to store parameters and performance spans of the electric motors 21, 22 that may be used by the control unit 110 to determine and select which one of a plurality of operating modes to operate in. Examples of operating modes are further explained in relation to Figure 3 and 8. The control unit 110 may be configured to control the drive assembly 20 in many different ways, depending on the load on the actuator, the desired speed of the linear movement, the configuration of the electric motors 21, 22 and the configuration of the planetary gear assembly 40. The drive assembly 20 is typically controlled to achieve as low energy consumption of the actuator assembly 100 as possible. Controlling the drive assembly 20 may comprise determining how to operate the electric motors 21, 22 from a table or matrix stored in the storage medium. The table or matrix may comprise information on how to operate the electric motors 21, 22 with high efficiency for different desired speeds and required torques. Alternatively, the control unit 110 may be configured to dynamically calculate and determine an optimal operating point in which the electric motors 21, 22 operate with high efficiency based on the load on the actuator and the desired speed. In such case, other aspects relating to current operating conditions can be taken into consideration, for example that the temperature affects the efficiency of the electric motors 21, 22. Such dynamic calculation will typically involve the equations (1) and (2) as disclosed herein to determine the best combination of motor efficiency for the first electric motor 21 and the second electric motor 22.

Figure 2 schematically shows a planetary gear assembly 40 according to an example of the present disclosure. The planetary gear assembly 40 comprises a sun gear 42, a ring gear 44, planet gears 46 and a planet carrier 48. It is to be understood that the planetary gear assembly may comprise any number of planet gears 46.

Figure 3 schematically shows a linear electro-mechanical actuator assembly 100 according to an example of the present disclosure. The actuator assembly 100 may be configured as disclosed in Figure 1 and thus comprises a translation assembly 10 and a drive assembly 20, as well as a control unit 110. The planetary gear assembly 40 of the drive assembly 20 may be configured as in Figure 2.

This figure also shows a power source 150 providing electric power $P_{el}$ to the drive assembly 20. The power source 150 may comprise a battery, a system of a plurality of batteries or the electric mains. It is to be understood that the power source 150 or the drive assembly 20 also could comprise power converting units for converting DC power signals to AC power signals for the electric motors 21, 22. The electric power $P_{el}$ is provided to the electric motors 21, 22 which transforms the electric power $P_{el}$ to mechanical power $P_{me1}$, $P_{me2}$. The mechanical power $P_{me1}$, $P_{me2}$ from the electric motors 21, 22 is transferred to the planetary gear assembly 40 via input gears and the planetary gear assembly 20 transforms it into an output power $P_O$, thus an output speed and an output torque, provided to the translation assembly 10 of the actuator assembly 100 via an output gear.

Although not shown, the first electric motor 21 may be connected to the sun gear of the planetary gear assembly 40 and the second electric motor 22 may be connected to the ring gear of the planetary gear assembly 40. Thus, the sun gear and the ring gear may be the input gears of the planetary gear assembly 40. Furthermore, the rotatable part of the translation assembly 10 may be connected to the planet carrier of the planetary gear assembly 40. Thus, the planet carrier may be the output gear of the planetary gear assembly 40.

The control unit 110 is configured to control the drive assembly 20 to selectively operate in a plurality of operating modes, such as at least a single drive mode and a first dual drive mode. In the single drive mode, one single electric motor 21, 22 is controlled to drive the planetary gear assembly 40. In the first dual drive mode, the first and second electric motors 21, 22 are controlled in the same rotational direction to drive the planetary gear assembly 40. The control unit 110 is further configured to control the drive assembly 20 to selectively operate in a second dual drive mode, wherein the first and second electric motor 21, 22 are controlled in opposite directions to drive the planetary gear assembly 40. Thus, in the second dual drive mode, one of the electric motors 21, 22 will operate as a motor and the other will operate as a generator.

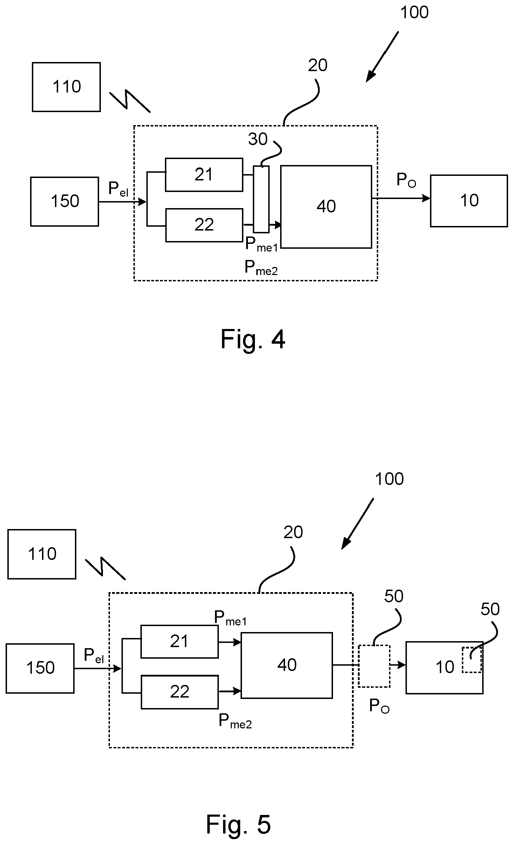

Figure 4 schematically shows a linear electro-mechanical actuator assembly 100 according to an example of the present disclosure. The actuator assembly 100 may be configured as disclosed in Figure 3 but the drive assembly 20 further comprises a clutch 30 configured to be controlled to selectively connect both electric motors 21, 22 to the same gear of the planetary gear assembly 40. As an example, both electric motors 21, 22 may be connected to the sun gear of the planetary gear assembly 40. The first dual drive mode may thus comprise controlling the clutch 30 to connect both electric motors 21, 22 to the same input gear of the planetary gear assembly 40, and controlling the electric motors 21, 22 to operate in the same rotational direction.

Figure 5 schematically shows a linear electro-mechanical actuator 100 assembly according to an example of the present disclosure. The actuator assembly 100 may be configured as disclosed in Figure 1, 3 or 4. In this example, the actuator assembly 100 comprises a load holding assembly 50 arranged to prevent movement of the linearly moveable part of the translation assembly 10 in response to a load holding event. A load holding event may for example include motor failure or similar.

The load holding assembly 50 may be arranged as a separate assembly between the drive assembly 20 and the translation assembly 10 or it may be integral with the translation assembly 10.

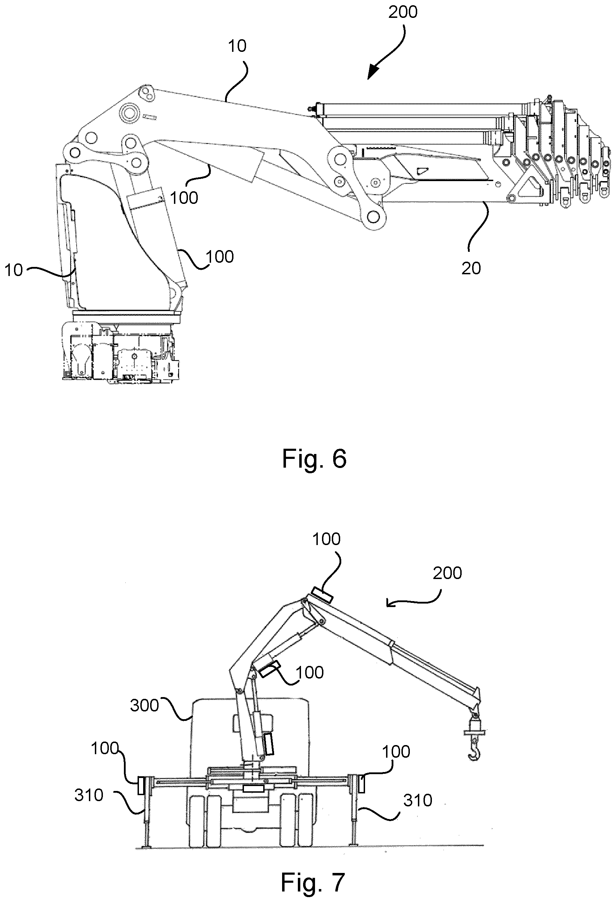

Fig. 6 schematically illustrates a working equipment 200 according to an example. The working equipment 200 is here a loader crane comprising movable parts 10, such as a crane column rotatable around a vertical axis and a first crane boom pivotally attached to the crane column. A telescopic crane boom 20 is further pivotally arranged at the first crane boom. A linear electro-mechanical actuator assembly 100 is arranged for lifting and lowering the pivotally arranged crane parts 10 and the telescopic crane boom 20 relative to their respective attachment.

Fig. 7 schematically illustrates a working equipment 200 arranged on a vehicle 300 according to an example. The working equipment 200 may be configured as disclosed in Figure 6. The working equipment 200 may further comprise linear electro-mechanical actuator assemblies 100 for extending stabilizer legs 310 of the vehicle 300.

Figure 8 shows three diagrams of electric motor efficiency as a function of torque and speed. The diagrams relate to the first and second electric motors 21, 22 of the actuator assembly 100 disclosed in any of Figure 1-5. Diagram A shows an example of the efficiency of the first electric motor $\eta_{EM1}$ as a function of torque $T_{EM1}$ and speed $\omega_{EM1}$, and diagram B shows an example of the efficiency of the second electric motor $\eta_{EM2}$ as a function of torque $T_{EM2}$ and speed $\omega_{EM2}$. Diagram C shows the total efficiency $\eta_{tot}$ when operating both the first electric motor 21 and the second electric motor 22. Diagram A and B are here identical based on the assumption that the first and second electric motors 21, 22 are identically configured with identical performance. As can be seen in diagram A and B, both electric motors 21, 22 will operate with low efficiency at low torque and low speed. As can be seen in diagram C, operating the two electric motors 21, 22 to drive the planetary gear assembly 40 will provide a wider force and speed window and thus more operating points with a high total efficiency $\eta_{tot}$. Specifically, operating both electric motors 21, 22 in opposite directions will enable operation with high total efficiency at low speed and low torque. This way, operating a heavy loaded crane arm in a slow and safe manner will be possible. The control unit 110 of the actuator assembly 100 may be configured to determine the optimal operating point for the first and second electric motor 21, 22 and thus be configured to determine the best combination of $\eta_{EM1}$ and $\eta_{EM2}$.

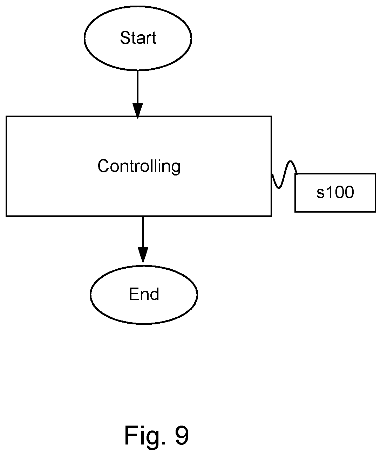

Figure 9 schematically illustrates a method for controlling a linear electro-mechanical actuator assembly 100 according to an example of the present disclosure. The actuator assembly 100 is configured as disclosed in Figure 1, 3, 4, or 5. The method may be performed by the control unit 110 upon execution of a computer program by the at least one processor 111. The control unit 110 may form part of another control unit or a system of control units for the working equipment. The control unit 110 may further be implemented as a distributed over multiple units. The computer program comprises computer-readable instructions that may be stored in a storage medium, such as a non-transitory hardware memory device of the control unit 110.

The method comprises the step of controlling S100 the drive assembly 20 based on a determined load on the translation assembly 10 and a desired speed of the linear movement of the translation assembly 10 so as to optimize the efficiency of the first and second electric motor 21, 22.

The method may include determining the load on the translation assembly 10. The load may be determined based on signals from a force load sensor arranged at the attachment point where the linearly moveable part 14 is attached to the working equipment 200 or at another location in the actuator assembly 100. Alternatively, the load is determined based on at least one operation parameter related to the actuator assembly 100, such as the current supply to the electric motors 21, 22. The method may also include determining the desired speed of the linear movement of the linearly movable part 14 of the translation assembly 10 based on input signals from a manually operated manoeuvring element associated with the working equipment or based on input signals generated by a control algorithm such as a path planner controlling the movement of e.g. a crane tip.

The step of controlling s100 the drive assembly 20 may comprise controlling the drive assembly 20 to selectively operate in a plurality of operating modes, comprising at least a single drive mode wherein one single electric motor 21, 22 is controlled to drive the planetary gear assembly 40, and a first dual drive mode wherein the first and second electric motors 21, 22 are controlled in the same rotational direction to drive the planetary gear assembly 40.

The step of controlling s100 the drive assembly 20 may comprise controlling the drive assembly 20 to selectively operate in a second dual drive mode, wherein the first and second motor 21, 22 are controlled in opposite directions to drive the planetary gear assembly 40. Which operate mode to operate in may be determined based on operator input or based on analysis of sensor values and stored performance parameters of the electric motors 21, 22.

The step of controlling s100 the drive assembly 20 may comprise controlling the clutch 30 to selectively connect both electric motors 21, 22 to the same gear 42, 44 of the planetary gear assembly 40.

The method may also comprise controlling a load holding assembly 50 to prevent movement of the linearly moveable part 14 of the translation assembly 10 in response to a load holding event.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

**Claims**

1. A linear electro-mechanical actuator assembly (100) for a working equipment (200), comprising:

    - a translation assembly (10) including a rotatable part (12) and a linearly movable part (14) connected to each other to translate a rotating movement of the rotatable part (12) to a linear movement of the linearly movable part (14); and
- a drive assembly (20) arranged to provide the rotating movement of the rotatable part (12) of the translation assembly (10);

wherein the drive assembly (20) comprises a first electric motor (21), a second electric motor (22) and a planetary gear assembly (40) connected to the rotatable part (12) of the translation assembly (10), wherein the actuator assembly (100) further comprises:

- a control unit (110) configured to control the drive assembly (20) based on a determined load on the translation assembly (10) and a desired speed of the linear movement of the translation assembly (10) so as to optimize the efficiency of the first and second electric motor (21, 22).

**2.** The actuator assembly (100) according to claim 1, wherein the first electric motor (21) and the second electric motor (22) are connected to different gears (42, 44) of the planetary gear assembly (40).

**3.** The actuator assembly (100) according to claim 1 or 2, wherein the first electric motor (21) is connected to a sun gear (42) of the planetary gear assembly (40), the second electric motor (22) is connected to a ring gear (44) of the planetary gear assembly (40) and the rotatable part (12) of the translation assembly (10) is connected to a planet carrier (48) of the planetary gear assembly (40).

**3.** The actuator assembly (100) according to any one of the preceding claims, wherein the control unit (110) is configured to control the drive assembly (20) to selectively operate in a plurality of operating modes, comprising at least a single drive mode wherein one single electric motor (21, 22) is controlled to drive the planetary gear assembly (40) , and a first dual drive mode wherein the first and second motors (21, 22) are controlled in the same rotational direction to drive the planetary gear assembly (40).

**4.** The actuator assembly (100) according to claim 3, wherein the control unit (110) further is configured to control the drive assembly (20) to selectively operate in a second dual drive mode, wherein the first and second motor (21, 22) are controlled in opposite directions to drive the planetary gear assembly (40).

**5.** The actuator assembly (100) according to any one of the preceding claims, wherein the drive assembly (20) further comprises a clutch (30) configured to be controlled to selectively connect both electric motors (21, 22) to the same gear (42, 44) of the planetary gear assembly (40).

**6.** The actuator assembly (100) according to any one of the preceding claims, further comprising:

- a load holding assembly (50) arranged to prevent movement of the linearly moveable part (14) of the translation assembly (10) in response to a load holding event.

**7.** The actuator assembly (100) according to claim 6, wherein the load holding assembly (50) is arranged as a separate assembly between the drive assembly (20) and the translation assembly (10) or is integral with the translation assembly (10).

**8.** The actuator assembly (100) according to any one of the preceding claims, wherein the control unit (110) is configured to determine the desired speed of the linear movement of the translation assembly (10) based on input signals from a manually operated manoeuvring element associated with the working equipment.

**9.** A working equipment (200) comprising at least one actuator assembly (100) according to any one of the preceding claims.

**10.** The working equipment (110) according to claim 9, wherein the working equipment (200) is configured to be arranged on a vehicle (300).

**11.** A method for controlling a linear electro-mechanical actuator assembly (100) comprising a translation assembly (10) including a rotatable part (12) and a linearly movable part (14) connected to each other to translate a rotating movement of the rotatable part (12) to a linear movement of the linearly movable part (14); and a drive assembly (20) arranged to provide the rotating movement of the rotatable part (12) of the translation assembly (10); wherein the drive assembly (20) comprises a first electric motor (21), a second electric motor (22) and a planetary gear assembly (40) connected to the rotatable part (12) of the translation assembly (10), wherein the method comprises the step of:

- controlling (S100) the drive assembly (20) based on a determined load on the translation assembly (10) and a desired speed of the linear movement of the translation assembly (10) so as to optimize the efficiency of the first and second electric motor (21, 22).

**12.** A computer program comprising computer-readable instructions which, when executed by at least one processor (111) of a linear electro-mechanical actuator assembly (100), causes the at least one processor (111) to perform the step of the method according to claim 11.

Fig. 1

Fig. 2

Fig. 3

100

20

30

110

150   P_el

| 21 |

| 22 |

40

P_O

10

$P_{me1}$

$P_{me2}$

## Fig. 4

100

20

50

50

110

150   P_el

| 21 |   $P_{me1}$

| 22 |   $P_{me2}$

40

10

$P_O$

## Fig. 5

Fig. 6

Fig. 7

A

$\eta_{EM1}$

$T_{EM1}/T_{EM1max}$

$\omega_{EM1}/\omega_{EM1max}$

B

$\eta_{EM2}$

$T_{EM2}/T_{EM2max}$

$\omega_{EM2}/\omega_{EM2max}$

C

$\eta_{tot}$

$T/T_{max}$

$\omega/\omega_{max}$

Fig. 8

Start

Controlling

s100

End

Fig. 9

Europäisches
Patentamt

European
Patent Office

Office européen
des brevets

## EUROPEAN SEARCH REPORT

**Application Number**

EP 24 22 3347

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2016/078692 A1 (CORETEQ SYSTEMS LTD [GB]) 26 May 2016 (2016-05-26) * figures 1-5 * ----- | 1-13 | INV. F16H3/72 F16H25/20 F16H25/24 |
| A | EP 0 890 038 B1 (BOSCH GMBH ROBERT [DE]) 30 January 2002 (2002-01-30) * figure 1 * ----- | 1-13 | |

**TECHNICAL FIELDS SEARCHED (IPC)**

F16H

The present search report has been drawn up for all claims

| Place of search | Date of completion of the search | Examiner |
|---|---|---|
| Munich | 18 June 2025 | Belz, Thomas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

..............................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 22 3347

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2025

| Patent document cited in search report | | Publication date | Patent family member(s) | | Publication date |
|---|---|---|---|---|---|
| WO 2016078692 | A1 | 26-05-2016 | GB | 2548514 A | 20-09-2017 |
| | | | WO | 2016078692 A1 | 26-05-2016 |
| EP 0890038 | B1 | 30-01-2002 | DE | 19611910 A1 | 02-10-1997 |
| | | | EP | 0890038 A1 | 13-01-1999 |
| | | | JP | 2000507332 A | 13-06-2000 |
| | | | WO | 9736116 A1 | 02-10-1997 |

EPO FORM P0459

For more details about this annex : see Official Journal of the European Patent Office, No. 12/82